**Europäisches Patentamt**

**European Patent Office**

**Office européen des brevets**

(19)

(11) Veröffentlichungsnummer : **0 352 457 B1**

(12) ## EUROPÄISCHE PATENTSCHRIFT

(45) Veröffentlichungstag der Patentschrift :
**07.10.92 Patentblatt 92/41**

(21) Anmeldenummer : **89110573.6**

(22) Anmeldetag : **12.06.89**

(51) Int. Cl.$^5$ : **C09D 5/44,** C08G 59/42,
C08G 59/58

(54) **Wasserdispergierbare Bindemittel für kationische Elektrotauchlacke, Verfahren zu ihrer Herstellung sowie Verfahren zur Beschichtung elektrisch leitfähiger Substrate.**

Verbunden mit 89907119.5/0426693
(europäische
Anmeldenummer/Veröffentlichungsnummer)
durch Entscheidung vom 30.12.91.

(30) Priorität : **27.07.88 DE 3825464**

(43) Veröffentlichungstag der Anmeldung :
**31.01.90 Patentblatt 90/05**

(45) Bekanntmachung des Hinweises auf die
Patenterteilung :
**07.10.92 Patentblatt 92/41**

(84) Benannte Vertragsstaaten :
**AT BE CH DE ES FR GB IT LI LU NL SE**

(56) Entgegenhaltungen :
EP-A- 0 004 090
EP-A- 0 059 895
EP-A- 0 077 023
FR-A- 2 314 222

(73) Patentinhaber : **BASF Lacke + Farben AG
Glasuritstrasse 1
W-4400 Münster (DE)**

(72) Erfinder : **Cibura, Klaus, Dr.
25680 W. Twelve Mile Road
Southfield Michigan 48034 (US)**
Erfinder : **Reiter, Udo, Dr.
Regerstrasse 22
W-4404 Telgte (DE)**
Erfinder : **Jouck, Walter, Dr.
Grüner Weg 7
W-4400 Münster (DE)**
Erfinder : **Ott, Günther, Dr.
Von-Holte-Strasse 101 a
W-4400 Münster (DE)**

(74) Vertreter : **Münch, Volker, Dr. et al
c/o BASF Lacke + Farben AG Patentabteilung
Glasuritstrasse 1 Postfach 61 23
W-4400 Münster (DE)**

## Beschreibung

Die vorliegende Erfindung betrifft wasserdispergierbare Bindemittel für kationische Elektrotauchlacke auf der Basis von modifizierten Epoxidharzen, wobei die Epoxidharze Reaktionsprodukte von

(A) niedermolekularen, bevorzugt aromatische Gruppen enthaltenden Epoxidharzen,

(B) einem Präpolymeren mit gegenüber Epoxidgruppen reaktiven Gruppen

(C) primären, sekundären und/oder tertiären Aminen und/oder deren Salzen oder einer Sulfid/Säure-Mischung oder einer Phosphin/Säure-Mischung

sind. Gegenstand der Erfindung ist weiterhin ein Verfahren zur Herstellung dieser wasserdipergierbaren Bindemittel sowie ein Verfahren zur Beschichtung elektrisch leitfähiger Substrate.

Die kationische Elektrotauchlackierung ist ein vor allem zum Grundieren häufig angewandtes Lackierverfahren, bei dem wasserverdünnbare kationische Gruppen tragende Kunstharze mit Hilfe von Gleichstrom auf elektrisch leitende Körper aufgebracht werden. Als Bindemittel für diese Elektrotauchlacke werden modifizierte Epoxidharze verwendet.

Sowohl beim Aufbau als auch bei der Modifizierung von Epoxidharzen werden Epoxidgruppen unter Bildung von sekundären Hydroxylgruppen geöffnet. Die so gebildeten OH-Gruppen können wiederum an eine Epoxidgruppe addiert werden, wobei eine Etherbindung und eine neue sekundäre Hydroxylgruppe entstehen.

Bei der industriellen Produktion von modifizierten Epoxidharzen treten Schwierigkeiten auf, wenn es nicht gelingt, die Reaktion durch geeignete Wahl der Umsetzungsbedingungen so zu kontrollieren, daß genügend viele reaktionsfähige Epoxidgruppen zur Durchführung der erwünschten Modifizierungsreaktionen zur Verfügung stehen.

Bisher versuchte man, die oben erläuterten Produktionsschwierigkeiten durch eine möglichst weitgehende Unterdrückung der Reaktion zwischen sekundären Hydroxylgruppen und Epoxidgruppen zu vermeiden.

So wurde zum Beispiel in der DE-PS 2701002 vorgeschlagen, die Reaktion zwischen den sekundären Hydroxylgruppen und Epoxidgruppen dadurch zurückzudrängen, daß die Epoxidharze mit organischen Polyolen, die mindestens zwei alkoholische primäre OH-Gruppen tragen, kettenverlängert werden, da die alkoholischen primären OH-Gruppen gegenüber Epoxidgruppen reaktiver sind als die sekundären OH-Gruppen des Epoxidharzes. Kationische Elektrotauchlacke auf Basis dieser modifizierten Epoxidharze führen jedoch zu Überzügen, die insbesondere in Bezug auf die Elastizität und in Bezug auf die Zwischenhaftung, d.h. einerseits in Bezug auf die Haftung auf dem Untergrund und andererseits in Bezug auf die Haftung veschiedener Lacke auf der Elektrotauchlackierung, verbesserungsbedürftig sind.

Eine weitere Möglichkeit zum Aufbau modifizierter Epoxidharze ist in der EP 4090 beschrieben. Bei dem dort beschriebenen Verfahren wird zunächst ein Teil der reaktionsfähigen Gruppen des Epoxidharzes mit einem modifizierenden Material aus der Gruppe der carboxyl- oder amino- oder hydroxylgruppenhaltigen Verbindungen umgesetzt. In einem zweiten Verfahrensschritt werden dann durch Reaktion mit Alkylketiminen Aminogruppen in das Epoxidharz eingeführt. Aber auch diese Systeme sind insbesondere in Bezug auf die Elastizität der resultierenden Beschichtungen verbesserungsbedürftig.

Schließlich ist aus der EP-A 59895 ein Verfahren zur Herstellung modifizierter Epoxidharze bekannt, bei dem zunächst niedermolekulare Epoxidharze mit aliphatischen und/oder alicyclischen polyfunktionellen Alkoholen und/oder Carbonsäuren mit einem Molekulargewicht unter 350 kettenverlängert und in einem zweiten Schritt durch Umsetzung mit polyfunktionellen Alkoholen und/oder Carbonsäuren mit einem Molekulargewicht von 500 - 5000 modifiziert werden. Danach erfolgt der Einbau von Aminen und/oder Salzen oder ähnlichen Gruppen zur Erzielung der Wasserdispergierbarkeit. Dieses Verfahren hat jedoch den Nachteil, daß es wegen der Vielzahl der Verfahrensstufen recht aufwendig ist.

Der vorliegenden Erfindung lag somit die Aufgabe zugrunde, neue modifizierte Epoxidharze zur Verfügung zu stellen, die als Bindemittelkomponente in kationischen Elektrotauchlacken eingesetzt werden können und dort zu Beschichtungen mit verbesserter Elastizität bzw. Flexibilität und verbesserter Zwischenhaftung führen. Insbesondere sollten die Beschichtungen gegenüber dem Stand der Technik verbesserte Ergebnisse im Impact- und Reverse-Impact-Test sowie eine verbesserte Erichsentiefung aufweisen.

Weiterhin sollten diese modifizierten Epoxidharze nach einem möglichst einfachen Verfahren herstellbar sein, bei dem gewährleistet ist, daß genügend viele reaktionsfähige Epoxidgruppen zur Durchführung der erwünschten Modifizierungsreaktion zur Verfügung stehen.

Die Aufgabe wurde erfindungsgemäß gelöst durch Bereitstellung von

Wasserdispergierbaren Bindemitteln für kationische Elektrotauchlacke auf der Basis von modifizierten Epoxidharzen, wobei die Epoxidharze Reaktionsprodukte von

(A) niedermolekularen, bevorzugt aromatische Gruppen enthaltenden Epoxidharzen,

(B) einem oder mehreren Präpolymeren mit gegenüber Epoxidgruppen reaktiven Gruppen,

(C) primären, sekundären und/oder tertiären Aminen und/oder deren Salzen oder einer Sulfid/Säure-Mischung oder einer Phosphin/Säure-Mischung
sind, und die dadurch gekennzeichnet sind, daß

a) als Komponente (A) Epoxidharze mit einem Epoxidäquivalentgewicht unter 750 eingesetzt werden,

b) als Komponente (B) 10 bis 60 Gew.-%, bevorzugt 20 bis 40 Gew.-%, bezogen auf das Gesamtbindemittel eines oder mehrerer Präpolymerer mit einem Molekulargewicht (Massenmittel) von 500 bis 5000 und einem durchschnittlichen Gehalt von 0,1 bis 1,9 Hydroxylgruppen und 0,1 bis 1,0 Carboxylgruppen pro Molekül eingesetzt werden, wobei die Summe der Hydroxyl- und der Carboxylgruppen größer gleich 1 und kleiner gleich 2 ist,

c) das Umsetzungsprodukt aus (A) und (B) einen Gehalt an aromatischen Gruppen, berechnet als im Festharzanteil in Gew.-% enthaltene Phenylengruppen, von 10 bis 45 Gew.-% aufweist und

d) das Molverhältnis der Komponente A zu der Komponente B zwischen 4:1 und 1:1 liegt.

Es ist überraschend und war nicht vorhersehbar, daß gerade die Verwendung der oben genannten OH und COOH-Gruppen haltigen Präpolymeren als Modifizierungsmittel zu wasserdispergierbaren Bindemitteln mit den oben geforderten Eigenschaften führt.

Als Komponente A können alle Verbindungen eingesetzt werden, die mindestens zwei reaktive Epoxidgruppen enthalten und ein Epoxidäquivalentgewicht unter 750 aufweisen. Besonders bevorzugte Epoxidverbindungen sind aus Polyphenolen und Epihalohydrinen hergestellte Diglycidylether von Polyphenolen. Als Polyphenole können zum Beispiel eingesetzt werden:

Ganz besonders bevorzugt: Bisphenol A und Bisphenol F

Besonders bevorzugt: 1,1-Bis-(4-hydroxyphenyl)n-heptan

Außerdem sind auch 4,4′ Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphtyl)methan, 1,5 Dihydroxynaphthalin und phenolische Novolakharze geeignet.

Bevorzugte Epoxidverbindungen sind auch Diglycidylether von mehrwertigen Alkoholen wie Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan.

Es können auch Diglycidylester von Polycarbonsäuren, wie zum Beispiel Oxalsäure, Bernsteinsäure, Glutarsäure, Terephtalsäure, 2,6-Naphthalindicarbonsäure, dimerisierter Linolensäure usw., eingesetzt werden. Typische Beispiele sind Glycidyladipat und Glycidylphthalat.

Ferner sind Hydantoinepoxide, epoxidiertes Polybutadien und Diepoxidverbindungen geeignet, die man durch Epoxidierung einer olefinisch ungesättigten alicyclischen Verbindung erhält.

Als Komponente B können alle Präpolymeren eingesetzt werden, die im Durchschnitt 0,1 bis 1,9 Hydroxylgruppen und 0,1 bis 1,0, bevorzugt 0,3 bis 0,7 Carboxylgruppen pro Molekül tragen, wobei die Summe der Hydroxyl- und der Carboxylgruppen größer gleich 1 und kleiner gleich 2 ist. Das Molekulargewicht (Massenmittel) der Präpolymeren beträgt 500 bis 5000, vorzugsweise 530 bis 3000. Bevorzugt werden als Komponente B lineare Polyester eingesetzt.

Man kann die Polyester durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schliessen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Bernsteinsäure, Azelainsäure, Sebazinsäure, Maleinsäure und Glutarsäure. Anstelle dieser Säuren können auch ihre Anhydride, soweit diese existieren, verwendet werden.

Neben der Standardpolyveresterung können ferner die -OH-und -COOH-Gruppen tragenden linearen Polyester bevorzugt durch eine 2-stufige Reaktionsführung hergestellt werden, indem man in einer erster Stufe die oben beschriebenen Komponenten durch einen entsprechenden Diol-Überschuß in ein Polyesterdiol überführt, also in einen an beiden Enden der Polyesterkette OH-terminiertes Molekül und dann in einer zweiten Reaktion mit einem Anhydrid, z.B. Phthalsäureanhydrid oder Bernsteinsäureanhydrid zum -OH und COOH-Gruppen tragenden Polyester umsetzt.

Die Komponente B wird in einer Menge von 10 bis 60 Gew.-%, bevorzugt 20 bis 40 Gew.-%, jeweils bezogen auf das Gesamtbindemittel, zugesetzt. Die Menge an Komponente B ist dabei so zu wählen, daß das Molverhältnis der Komponente A zu der Komponente B zwischen 4:1 und 1:1, bevorzugt 2,5:1 bis 1,5:1 liegt und daß das erhaltene Zwischenprodukt noch genügend freie Epoxidgruppen für die Erzielung der Wasserverdünnbarkeit erforderliche Modifizierungsreaktion mit der Komponente C aufweist. Weiterhin muß je nach eingesetztem Epoxidharz die Menge der Komponente B so gewählt werden, daß das Zwischenprodukt aus A und B einen Gehalt an aromatischen Gruppen, berechnet als im Festharzanteil in Gew.-% enthaltene Phenylengruppen, von 10 bis 45 Gew.-% aufweist.

Die Umsetzung der Komponente A mit der Komponente B wird bei Temperaturen von 100 bis 190°C, ggf. in Anwesenheit eines Katalysators, lösungsmittelfrei, oder in einem inerten Lösungsmittel wie z.B. aromatischen Kohlenwasserstoffen, bevorzugt in Xylol oder in anderen Methylbenzolen, durchgeführt.

Daneben ist es auch möglich, sehr niedrigmolekulare Epoxidharze in situ während der Umsetzung mit der Komponente B durch Zugabe von beispielsweise Bisphenol A kettenzuverlängern.

Das aus den Komponenten A und B hergestellte Zwischenprodukt weist ein Molekulargewicht (Massenmittel) von 2000 bis 6000 auweisen.

Durch Verwendung von einem carboxylgruppenhaltigen Modifizierungsmittel als Komponente B ist aufgrund der gegenüber OH-Gruppen höheren Reaktivität von COOH-Gruppen der vollständige Einbau des Modifizierungsmittels über diese COOH-Gruppen gewährleistet. Daher werden bevorzugt Polyester mit einer (1,0) Carboxylgruppe im Molekül eingesetzt.

Zur Erzielung der Wasserdispergierbarkeit wird das aus Komponente A und Komponente B hergestellte epoxidgruppenhaltige Zwischenprodukt durch Umsetzung mit der Komponente C weiter modifiziert.

Außer dieser bevorzugten Reaktionsfolge besteht selbstverständlich auch die Möglichkeit, zunächst die Komponente A mit einem stöchiometrischen Unterschuß der Komponente C zu einem epoxidgruppenhaltigen Zwischenprodukt durch Umsetzung mit der Komponente B zu modifizieren. Diese Reaktionsfolge ist beispielsweise in der DE-PS 2701002 beschrieben.

Als Komponente C können primäre oder sekundäre Amine bzw. deren Salze, Salze von tertiären Aminen, Sulfid/Säure- oder Phosphin/Säuremischungen oder ein Gemisch aus diesen Verbindungen eingesetzt werden, wobei die sekundären Amine besonders bevorzugte C Komponenten sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Dietylamin, Dipropylamin, Methylbutylamin und dergleichen. Geeignet sind ebenfalls Alkanolamine wie zum Beispiel Methylethanolamin, Diethanolamin und dergleichen. Ferner sind Dialkylaminoalkylamine wie zum Beispiel Dimethylaminoethylamin, Diethylaminopropylamin, Dimethylaminopropylamin und dergleichen geeignet.

In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, Propionsäure, Buttersäure, Salzsäure, Phosphorsäure, Schwefelsäure, Kohlensäure, bevorzugt Essigsäure) oder auch durch Umsetzung der Oxirangruppen mit Salzen eines Amins oder einer Sulfid/Säure- oder Phosphin/Säure-Mischung erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS 3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet werden, obwohl sie in der Regel unter Bildung des Säuresalzes reagieren.

Eine Umsetzung der Oxirangruppen mit einem Sulfid in Gegenwart einer Säure führt zu Harzen mit Sulfoniumgruppen.

Als Sulfide können beliebige Sulfide verwendet werden, die mit Epoxygruppen reagieren und keine Gruppen enthalten, die die Umsetzung stören. Das Sulfid kann ein aliphatisches, gemischtes aliphatisch aromatisches, aralkylisches oder cyclisches Sulfid sein. Beispiele von solchen Sulfiden sind Dialkylsulfide, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie Thiodiethanol, Thiodipropanol, Thiodibutanol und dergleichen.

Als Säure kann eine beliebige Säure verwendet werden, die ein tertiäres Sulfoniumsalz bildet. Bevorzugt ist die Säure aber eine organische Carbonsäure. Beispiele von geeigneten Säuren sind Borsäure, Ameisensäure, Milchsäure, Essigsäure, Propionsäure, Buttersäure, Salzsäure, Phosphorsäure und Schwefelsäure. Die Säure hat bevorzugt eine Dissoziationskonstante von größer als etwa 1 x 10$^{-5}$.

Das Verhältnis von Sulfid zu Säure ist nicht besonders kritisch. Da ein Äquivalent Säure für die Bildung eines Mols einer Sulfoniumgruppe verwendet wird, wird bevorzugt mindestens ein Äquivalent Säure für jedes gewünschte Mol der Umwandlung von Sulfid zu Sulfonium verwendet.

Eine Umsetzung der Oxirangruppen mit einem Phosphin in Gegenwart einer Säure führt zu Harzen mit Phosphoniumgruppen.

Das verwendete Phosphin kann ein beliebiges Phosphin sein, das keine störenden Gruppen enthält. Beispiele solcher Phosphine sind aliphatische, aromatische oder alicyclische Phosphine, wobei als spezifische Beispiele folgende Phosphine genannt seien:

Niedrige Trialkylphosphine, wie Trimethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin, alicyclische Phosphine, wie Tetramethylenethylphosphin und dergleichen.

Die verwendete Säure kann eine beliebige Säure sein, die ein quaternäres Phosphoniumsalz bildet. Bevorzugt ist die Säure aber eine organische Carbonsäure. Beispiele von geeigneten Säuren sind Borsäure, Milchsäure, Ameisensäure, Essigsäure, Propionsäure, Buttersäure, Salzsäure, Phosphorsäure und Schwefelsäure.

Die Säure soll bevorzugt eine Dissoziationskonstante von größer als etwa 10$^{-5}$ haben.

Das Verhältnis von Phosphin zur Säure ist nicht besonders kritisch. Da ein Äquivalent Säure zur Bildung von einem Mol Phosphoniumgruppe erforderlich ist, wird bevorzugt mindestens etwa ein Äquivalent Säure für jedes Mol der gewünschten Umwandlung von Phosphin zu Phosphonium verwendet.

Die erfindungsgemäß hergestellten Bindemittel können nach an sich bekannten Methoden durch Zusatz von Vernetzungsmitteln vernetzt bzw. durch chemische Modifikation in selbstvernetzende Systeme überführt werden. Ein selbstvernetzendes System kann zum Beispiel dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Die Vernetzungsmittel werden in der Regel in einer Menge von 5 bis 60, bevorzugt 20 bis 40 Gew.-% bezogen auf das Bindemittel eingesetzt.

Häufig angewandte Methoden zur Vernetzung von Bindemitteln sind zum Beispiel in folgenden Patentdokumenten publiziert: GB 13,03 480, europäische Patentanmeldung 12 463, US-PS 4,252,703 und GB 15 57 516.

Beispiele für geeignete Aminoplastvernetzungsmittel sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze. Ebenso verwendbar sind alkylierte Harnstofformaldehydharze.

Als Vernetzungsmittel werden bevorzugt blockierte Polyisocyanate eingesetzt. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisoyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Diphenylendiisocyanat, 1,5-Naphthylendiisocyanat, 1,4- Naphthylendiisocyanat, 1-Isocyanatomethyl-5-isocyanato-1,3,3-trimethylcyclohexan, bis(4-Isocyanatocyclohexyl)methan, bis(4-Isocyanatophenyl) methan, 4,4'-Diisocyanatodiphenylether und 2,3-bis(8-Isocyanatooctyl)-4-octyl-5-hexylcyclohexan. Es können auch Polyisocyanate von höherer Isocyanatfunktionalität verwendet werden. Beispiele dafür sind tris(4-Isocyanatophenyl)methan, 1,3,5-Triisocyanatobenzol, 2,4,6-Triisocyanatotoluol, 1,3,5-tris(6-Isocyanatohexylbiuret, bis(2,5-Diisocyanato-4-methylphenyl) methan, und polymere Polyisocyanate, wie Dimere und Trimere von Diisocyanatotoluol. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatischen Alkohole, wie Methyl-, Ethyl-, Chlorethyl-, Propyl-, Butyl-, Amyl-, Hexyl-, Heptyl-, Octyl-, Nonyl-, 3,5,5-Trimethylhexyl-, Decyl- und Lauryalkohol; cycloaliphatische Alkohole wie Cyclopentanol und Cyclohexanol; aromatische Alkylakohole, wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben beschriebenen teilblockierten Polyisocyanate verwendet werden.

Den unter Verwendung der erfindungsgemäßen Bindemittel hergestellten wäßrigen Überzugszusammensetzungen können Pigmente in üblichen Mengen und allgemein übliche Zusätze wie z.B. koaleszierende Lösungsmittel, oberflächenaktive Mittel, Vernetzungskatalysatoren, Antioxidanten, Füllstoffe und Antischaummittel in üblichen Mengen zugegeben werden.

Die mit Hilfe der erfindungsgemäßen Bindemittel zubereiteten wäßrigen Systeme sind insbesondere für das kationische Elektrotauchlackierverfahren geeignet; sie können aber auch in konventionellen Beschichtungsverfahren eingesetzt werden. Als Beschichtungssubstrate können zum Beispiel gegebenenfalls vorbehandelte Metalle wie Eisen, Stahl, Kupfer, Zink, Messing, Magnesium, Zinn, Nickel; Chrom und Aluminium aber auch imprägniertes Papier und andere elektrisch leitende Substrate benutzt werden.

Der Einsatz der erfindungsgemäßen Bindemittel führt zu Beschichtungen mit hoher Elastizität und Flexibilität sowie guten Zwischenhaftungseigenschaften. So führen die erfindungsgemäßen Bindemittel beim Einsatz im kationischen Elektrotauchlackierverfahren zu Beschichtungen, die gegenüber dem Stand der Technik deutlich verbesserte Impact-, Reserve-Impact- und Erichsentiefungs-Werte aufweisen.

Die erfindungsgemäßen Bindemittel eignen sich auch zur Herstellung von Pigmentpasten, das heißt, daß die Bindemittel auch als Reibharze eingesetzt werden können.

Bei der Verwendung des Harzes gemäß der Erfindung als Reibharz für die Herstellung einer Pigmentpaste werden die Mengenverhältnisse des modifizierten epoxyhaltigen Epoxidharzes (Reaktionsprodukt aus A und B) und des organischen tertiären Amins, die miteinander umgesetzt werden, bevorzugt so ausgewählt, daß das Trägerharz 0,8 bis 2,0 Stickstoffatome pro Molekül enthält. Geringere Mengen an quaternärem Stickstoff können zu einer schlechten Benetzbarkeit des Pigments führen, wogegen höhere Mengen zur Folge haben, daß die Harze zu wasserlöslich sind.

Man stellt Pigmentpasten nach der Erfindung her, indem man ein Pigment in dem Reibharz in gut bekannter Weise zerkleinert oder dispergiert. Die Pigmentpaste enthält als wesentliche Bestandteile das Reibharz und mindestens ein Pigment.

Außerdem können aber in der Pigmentzusammensetzung noch andere übliche Zusatzstoffe vorhanden sein, wie Weichmacher, Netzmittel, oberflächenaktive Mittel oder Entschäumer.

Die Anreibung der Pigmente erfolgt in der Regel in Kugelmühlen, Sandmühlen, Cowles-Mühlen und kontinuierlichen Mahlvorrichtungen bis das Pigment auf die gewünschte Teilchengröße zerkleinert worden ist und bevorzugt durch das Harz benetzt bzw. darin dispergiert worden ist. Nach dem Zerkleinern sollte die Teilchengröße des Pigments im Bereich von 10 Mikron oder weniger liegen. Im allgemeinen wird auf eine Hegman-Feinheit von etwa 6 bis 8 zerkleinert.

Als Pigment können bei der Erfindung die gut bekannten Pigmente benutzt werden. Im allgemeinen ist Titandioxid das einzige oder das hauptsächliche weiße Pigment. Andere weiße Pigmente oder Streckmittel, wie Anitimonoxid, Zinkoxid, basisches Bleicarbonat, basisches Bleisulfat, Bariumcarbonat, Porzellan, Ton, Calciumcarbonat, Aluminiumsilicat, Siliciumdioxid, Magnesiumcarbonat und Magnesiumsilicat können aber auch verwendet werden. Als farbige Pigmente können beispielsweise Cadmiumgelb, Cadmiumrot, Ruß, Phthalocyaninblau, Chromgelb, Toluidinrot und hydratisiertes Eisenoxid benutzt werden. Wegen weiteren allgemeinen Hinweisen auf die Zerkleinerung von Pigmenten und die Formulierung von Anstrichmassen wird auf folgende Bücher verwiesen:

D.H. Parker, Principles of Surface Coating Technology, Intersience Publishers, New York (1965)

R.L. Yates, Elektropainting, Robert Draper Ltd. Teddington England (1966)

H.F. Payne, Organic Coating Technology, Band 2, Wiley and Sons, New York (1961).

Die Erfindung betrifft auch ein Verfahren zur Herstellung von Bindemitteln für kationische Elektrotauchlacke auf der Basis von modifizierten Epoxidharzen, die gegebenenfalls Vernetzungsmittel, Pigmente, Verlaufmittel und andere übliche Hilfsmittel enthalten und bei denen die Epoxidharze Reaktionsprodukte von

(A) niedermolekularen, bevorzugt aromatische Gruppen enthaltenden Epoxidharzen,

(B) einem oder mehreren Präpolymeren mit gegenüber Epoxidgruppen reaktiven Gruppen,

(C) primären, sekundären und/oder tertiären Aminen und/oder deren Salzen oder einer Sulfid/Säure-Mischung oder einer Phosphin/Säure-Mischung

sind, dadurch gekennzeichnet, daß

a) als Komponente (A) Epoxidharze mit einem Epoxidäquivalentgewicht unter 750 eingesetzt werden,

b) als Komponente (B) 10 bis 60 Gew.-%, bevorzugt 20 bis 40 Gew.-%, bezogen auf das Gesamtbindemittel, eines oder mehrerer Präpolymerer mit einem Molekulargewicht (Massenmittel)von 500 bis 5000 und einem durchschnittlichen Gehalt von 0,1 bis 1,9 Hydroxylgruppen und 0,1 bis 1,0 Carboxylgruppen pro Molekül eingesetzt werden, wobei die Summe der Hydroxyl- und der Carboxylgruppen größer gleich 1 und kleiner gleich 2 ist,

c) das Umsetzungsprodukt aus (A) und (B) einen Gehalt an aromatischen Gruppen, berechnet als im Festharzanteil in Gew.-% enthaltene Phenylengruppen, von 10 bis 45 Gew.-% aufweist und

d) das Molverhältnis der Komponente A zu der Komponente B zwischen 4:1 und 1:1 liegt.

Zur Herstellung des Zwischenproduktes werden die Komponenten A und B in einem Molverhältnis von 4:1 bis 1:1, bevorzugt 2,5:1 bis 1,5:1, eingesetzt, wobei aber die bei der Beschreibung der Bindemittel aufgeführten Bedingungen einzuhalten sind.

Das erfindungsgemäße Verfahren wird folgendermaßen durchgeführt:

Komponente A und B werden gemischt und ggf. in Anwesenheit von Katalysatoren wie z.B. tertiären Aminen lösungsmittelfrei oder in Gegenwart von inerten Lösungsmitteln wie aromatischen Kohlenwasserstoffen, bevorzugt Xylol oder andere Methylaromaten, bei Temperaturen zwischen 100 und 190°C vollständig umgesetzt. (Die Vollständigkeit des Umsatzes kann über Epoxidäquivalentgewichtsbestimmungen kontrolliert werden.)

Das so erhaltene Reaktionsprodukt kann dann mit der Komponente C weiter modifiziert werden.

Die Reaktion zwischen Aminen (Komponente C) und epoxidgruppenhaltigen Zwischenprodukten springt häufig schon beim Vermischen der Reaktionspartner an. Je nach gewünschtem Reaktionsverlauf - vor allem zur Vervollständigung der Umsetzung - ist es empfehlenswert, die Reaktionstemperatur auf 50° bis 150° C zu erhöhen.

Außer dieser bevorzugten Reaktionsfolge können selbstverständlich auch zunächst die Komponente A und Komponente C ganz analog zu einem Zwischenprodukt umgesetzt werden, das dann mit der Komponente B modifiziert wird. Diese Reaktionsfolge ist beispielsweise in der DE-PS 2701002 beschrieben.

Für die Umsetzung mit der epoxyhaltigen Verbindung (Zwischenprodukt Z oder Komponente A, je nach gewählter Reaktionsfolge) sollte mindestens eine solche Menge an Amin verwendet werden, daß das Harz einen kationischen Charakter annimmt, d.h. daß es unter dem Einfluß einer Spannung in dem Beschichtungsbad zu der Kathode wandert, wenn es durch Zugabe einer Säure wasserverdünnbar gemacht worden ist. Es können im wesentlichen alle Epoxygruppen des Harzes mit einem Amin umgesetzt werde. Es ist aber auch möglich, überschüssuge Epoxygruppen in dem Harz zu belassen.

Eine weitere Möglichkeit, die erforderliche Wasserdispergierbarkeit zu erzielen, besteht darin, Mannich-Basen, d.h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar.

Die Umsetzung mit Amin-Säuresalzen wird bei Temperaturen von 20° bis 110°C vorgenommen. Die Reaktion ist ohne Zugabe von Lösungsmitteln durchführbar, bei Anwesenheit von Lösungsmitteln wie aromatischen Kohlenwasserstoffen oder Monoalkylethern von Ethylenglykol aber leichter steuerbar.

Das Verhältnis zwischen dem Amin-Säuresalz und der Epoxyverbindung kann schwanken und die optimalen Verhältnisse hängen von den speziellen Ausgangsstoffen ab. Im allgemeinen können etwa 1 bis etwa 50 Gewichtsteile Salz auf 100 Gewichtsteile Polyepoxid verwendet werden. Im allgemeinen wird das Verhältnis in Abhängigkeit von dem sich vom Quaternisierungsmittel ableitenden Stickstoffgehalt gewählt, der typischerweise etwa 0,05 bis etwa 16%, bezogen auf das Gesamtgewicht des Aminsalzes und des Polyepoxides ausmacht.

Die Sulfid/Säuremischung und die Epoxidverbindung werden umgesetzt, indem man die Komponenten mischt und in der Regel auf mäßig erhöhte Temperaturen, wie 70° bis 110°C, erwärmt. Ein Lösungsmittel ist nicht notwendig, obwohl häufig eines verwendet wird, um eine bessere Kontrolle der Reaktion zu erreichen. Geeignete Lösungsmittel sind aromatische Kohlenwasserstoffe, Monoalkylether von Ethylenglykol und aliphatische Alkohole. Die Mengeanteile des Sulfids und der Epoxidverbindung können variiert werden, und die optimalen Verhältnisse der beiden Komponenten hängen von den speziellen Ausgangsstoffen ab. Üblicherweise werden aber etwa 1 bis 50 Gewichtsteile Sulfid auf 100 Gewichtsteile der Epoxyverbindung verwendet. Die Mengenverhältnisse werden häufig auf den Gehalt an Schwefel bezogen, der typischerweise bei etwa 0,1 bis 35 %, bezogen auf das Gesamtgewicht des Sulfids und der Epoxyverbindung, liegt.

Die Phosphin/Säuremischung und die Epoxidverbindung werden umgesetzt, indem die Komponenten gemischt werden, wobei manchmal auf mäßig erhöhte Temperaturen erwärmt wird. Die Reaktionstemperatur ist nicht besonders kritisch, und sie wird in Abhängigkeit von den Ausgangsstoffen und ihren Reaktionsgeschwindigkeiten gewählt. Häufig verläuft die Reaktion bei Raumtemperatur oder bei bis auf 70°C erhöhten Temperaturen befriedigend schnell. In manchen Fällen ist es ratsam, höhere Temperaturen wie von etwa 110°C oder höher zu verwenden. Ein Lösungsmittel ist nicht notwendig, obwohl es häufig zur besseren Kontrolle der Reaktion verwendet werden kann. Beispiele für geeignete Lösungsmittel sind aromatische Kohlenwasserstoffe, Monoalkylether von Ethylenglykol und aliphatische Alkohole. Die Mengenanteile des Phosphins und der Ep-

7

oxidverbindung können variiert werden, und die optimalen Anteile hängen von den speziellen Ausgangsstoffen ab. Üblicherweise werden aber etwa 1 bis etwa 50 Gewichtsteile Phosphin auf 100 Gewichtsteile der Epoxidverbindung verwendet. Die Mengenanteile werden häufig unter Bezugnahme auf den Anteil an Phosphin angegeben, wobei typischerweise etwa 0,1 bis etwa 35 Gew.-% Phosphin, bezogen auf das Gesamtgewicht von Phosphin und Epoxidverbindung verwendet werden.

Beispiele für geeignete Verbindungen als Komponente A, B und C sowie für geeignete weitere Inhaltsstoffe der kationischen Elektrotauchlacke, wie z.B. Pigmente, Vernetzungsmittel, Verlaufmittel und andere übliche Hilfsmittel sind bei der Beschreibung der erfindungsgemäßen Bindemittel aufgeführt.

Die nach dem erfindungsgemäßen Verfahren hergestellten Bindemittel führen zu Beschichtungen mit hoher Elastizität und Flexibilität sowie guten Zwischenhaftungseigenschaften. Insbesondere beim Einsatz in kationischen Elektrotauchlacken führen sie zu Beschichtungen, die gegenüber dem bekannten Stand der Technik deutlich verbesserte Impact-, Reserve-Impact- und Erichsentiefungs-Werte aufweisen.

Die Erfindung betrifft außerdem ein Verfahren zum Beschichten elektrisch leitfähiger Substrate, bei dem

(1) das Substrat in ein wäßriges Elektrotauchbad eingetaucht wird, wobei das Elektrotauchbad als Bindemittel Reaktionsprodukt von

(A) niedermolekularen, bevorzugt aromatische Gruppen enthaltenden Epoxidharzen,

(B) einem oder mehreren Präpolymeren mit gegenüber Isocyanatgruppen reaktiven Gruppen

(C) primären, sekundären und/oder tertiären Aminen und/oder deren Salzen oder einer Sulfid/Säure-Mischung oder einer Phosphin/Säure-Mischung

ggf. in Kombination mit weiteren Bindemitteln sowie ggf. Vernetzungsmittel, Pigmente, Verlaufmittel und andere übliche Hilfsmittel enthält, wobei die Bindemittel durch Umsetzung selbstvernetzbar gemacht worden sind oder das Bad ein zusätzliches Vernetzungsmittel enthält,

(2) das Substrat als Kathode geschaltet wird,

(3) durch Gleichstrom ein Film auf dem Substrat abgeschieden wird,

(4) das Substrat aus dem Elektrotauchbad entfernt wird und

(5) der abgeschiedene Lackfilm eingebrannt wird,

dadurch gekennzeichnet, daß

a) als Komponente (A) Epoxidharze mit einem Epoxidäquivalentgewicht unter 750 eingesetzt werden,

b) als Komponente (B) 10 bis 60 Gew.-%, bevorzugt 20 bis 40 Gew.-%, bezogen auf das Gesamtbindemittel eines oder mehrerer Präpolymerer mit einem Molekulargewicht (Massenmittel) von 500 bis 5000 und einem durchschnittlichen Gehalt von 0,1 bis 1,9 Hydroxylgruppen und 0,1 bis 1,0 Carboxylgruppen pro Molekül eingesetzt werden, wobei die Summe der Hydroxyl- und der Carboxylgruppen größer gleich 1 und kleiner gleich 2 ist,

c) das Umsetzungsprodukt aus (A) und (B) einen Gehalt an aromatischen Gruppen, berechnet als im Festharzanteil in Gew.-% enthaltene Phenylengruppen, von 10 bis 45 Gew.-% aufweist und

d) das Molverhältnis der Komponente A zu der Komponente B zwischen 4:1 und 1:1 liegt.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 35°C, bevorzugt zwischen 20 und 30°C liegen.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m$^2$ .Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Die Erfindung wird in den folgenden Beispielen näher erläutert. Alle Angaben über Teile und Prozentsätze sind Gewichtsangaben, falls nicht ausdrücklich etwas anderes festgestellt wird.

Darstellung einer Vernetzerlösung

Gemäß der DE-OS 27 01 002, Beispiel 1, wird ein geblockter Isocyanatvernetzer (Polyurethanvernetzer) hergestellt, indem 218 Teile 2-Ethylhexanol langsam zu 291 Teilen einer 80/20-Isomermischung von 2,4-/2,6-Toluylendiisocyanat unter Rühren und in einer Stickstoffatmosphäre gegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Darstellung des Polyesters 1

1930 Gew.-Teile Adipinsäure, 1375 Gew.-Teile Neopentylglykol und 132 Gew.-Teile Xylol werden in einen temperierbaren, mit Rührer, Thermometer und Füllkörperkolonne ausgestatteten Reaktor eingewogen und langsam auf 140°C aufgeheizt. Das angefallene Reaktionswasser wird ausgekreist. Unter weiterer Temperatursteigerung bis auf maximal 180°C wird solange weiter verestert, bis eine Säurezahl von 92,6 mg KOH/g erreicht ist.

Darstellung des Polyesters 2

2591 Gew.-Teile Polycaprolactondiol (Molekulargewicht 532) 487 Gew.-Teile Bernsteinsäureanhydrid und 122 Gew.-Teile Xylol werden in einen temperierbaren, mit Rührer und Thermometer ausgestatteten Reaktor eingewogen und langsam auf 100°C aufgeheizt. Die Veresterungsreaktion wird, unter Temperatursteigerung auf maximal 130°C, solange fortgeführt, bis eine Säurezahl von 86,9 mg KOH/ g erreicht ist.

Darstellung des Polyesters 3

Analog zur Darstellung des Polyesters 1 werden 1930 Gew.-Teile Adipinsäure und 1375 Gew.-Teile Neopentylglykol in 132 Gew.-Teile Xylol umgesetzt. Im Unterschied zur Darstellung des Polyesters 1 wird die Veresterungsreaktion aber fortgeführt, bis eine Säurezahl von 62,9 mg KOH/g erreicht ist.

Darstellung eines Mahlbindemittels

Zu 953 Teilen eines handelsüblichen Epoxidharzes auf Basis Bisphenol A mit einem Epoxidäquivalentgewicht (EEW) von 890 werden 800 Teile Butylglykol gegeben. Die Mischung wird auf 80°C erhitzt. In die Harzlösung werden dann 221 Teile eines Umsetzungsproduktes aus 101 Teilen Dimethylethanolamin und 120 Teilen 80 %iger wäßriger Milchsäure gegeben. Man führt die Reaktion bei 80°C weiter, bis die Säurezahl unter 1 gefallen ist.

Darstellung einer Katalysatorpaste

43,73 Teile entionisiertes Wasser, 23,37 Teile des Mahlbindemittels und 32,90 Teile Dibutylzinnoxid werden gemischt und in einer Mühle auf eine Hegman-Feinheit Nr. 7 gemahlen. Danach wird die Mahlung filtriert.

Darstellung einer grauen Pigmentpaste

1800 Teile des Mahlbindemittels werden mit 2480 Teilen entionisiertem Wasser vorgelegt und mit 936 Teilen eines Extenders auf Basis Aluminiumsilikat, 1600 Teilen TiO$_2$, 20 Teilen Ruß, 200 Teilen Bleisilikat und 28 Teilen eines Schichtsilikats vermengt. Diese Mischung wird in einem Mahlaggregat auf eine Hegman-Feinheit von 5 bis 7 zerkleinert. Danach gibt man 200 Teile entionisiertes Wasser und 189 Teile der Katalysatorpaste hinzu und vermischt.

Beispiel 1

In einem mittels Wärmeträgeröl beheizbaren, mit Rührer, Rückflußkühler und Innenthermometer ausgestatteten Reaktionsgefäß werden 12,804 Gew.-Teile eines Epoxidharzes auf Basis Bisphenol A (Epoxidäquivalentgewicht EEW = 188), 1,112 Gew.-Teile Xylol und 5,410 Gew.-Teile des Polyesters 1 eingewogen und auf 110°C aufgeheizt. Man gibt 3,882 Gew.-Teile Bisphenol A zu und heizt weiter auf. Bei Erreichen von 143°C werden 0,027 Gew.-Teile Dimethylbenzylamin zugegeben und bis zum Eintreten einer exothermen Reaktion wird weiter aufgeheizt. Die Temperatur wird nun oberhalb von 160°C gehalten, bis das Epoxidäquivalentgewicht (EEW) einen Wert von 632 erreicht hat. Dann wird auf 127°C abgekühlt und 0,054 Gew.-Teile Dimethylbenzylamin zugegeben. Die Reaktionsmischung wird auf 130°C aufgeheizt und die Temperatur solange gehalten, bis ein EEW von 1200 erreicht ist. Nun werden 16,452 Gew.-Teile der Vernetzerlösung schnell zugegeben, die Reaktionsmischung wird auf 99°C abgekühlt und es werden 1,292 Gew.-Teile einer 72,5 %igen Lösung von Methylisobutyldiketimin von Diethylentriamin in Methylisobutylketon und 1,006 Gew.-Teile Methylethanolamin zugegeben. Nach dem Abklingen der exothermen Reaktion wird die Reaktionsmischung noch 1 h bei 113-116°C gehalten und dann mit 2,356 Gew.-Teilen Hexylglykol versetzt.

Das erhaltene Bindemittel 1 wird nun folgendermaßen in Wasser dispergiert: 24,964 Gew.-Teile entionisiertes Wasser und 0,484 Gew.-Teile Essigsäure werden vorgelegt und unter Rühren wird die oben beschriebene Bindemittellösung hinzugegeben. Nach 60 minütigem Homogenisieren werden weitere 30,334 Gew.-Teile entionisiertes Wasser innerhalb von 1 Stunde unter Rühren zugetropft. Zum Schluß wird durch ein Plattenfilter filtriert. Die entstandene Bindemitteldispersion 1 weist einen Festkörper von 35,5%, einen MEQ-Base-Wert von 0,57 Milliäquivalenten /g Festharz und einen MEQ-Säure-Wert von 0,23 Milliäquivalenten /g Festharz auf. Zur Herstellung eines pigmentierten kationischen Elektrotauchbades wurden 2280 Gew.-Teile entionisiertes Wasser in einen mit Rührer ausgestatteten Behälter gegeben und 1922 Gew.-Teile der vorstehend beschriebenen Bindemitteldispersion 1 sowie 775 Gew.-Teile der Pigmentpaste gegeben.

Nach dem Rühren für etwa 72 h hatte das pigmentierte Bad einen ph-Wert von 6,58 und einen Feststoffgehalt von etwa 20%.

Die Abscheidung der Lackfilme erfolgte nach 10-tägiger Alterung und Ultrafiltration des Lackbades bei 27°C Badtemperatur während 120 s. Die Abscheidespannung wurde jeweils so gewählt, daß eine Schichdicke von 18 μm erzielt wurde. Als Substrate dienen zinkphosphatierte Bleche, die als Kathode geschaltet sind. Die beschichteten Bleche werden abgespült und 15 min bei 180°C im Umluftofen getrocknet. Die Abprüfergebnisse der Beschichtungen zeigt Tabelle 1.

Beispiel 2

Es wurde analog Beispiel 1 verfahren mit dem Unterschied, daß zur Herstellung des Bindemittels statt 5,410 Gew.-Teilen des Polyesters 1 nun 5,759 Gew.-Teile des Polyesters 2 eingesetzt wurden.

Die erhaltene Bindemitteldispersion 2 weist einen Festkörper von 36,1%, einen MEQ-Base-Wert von 0,54 Milliäquivalenten /g Festharz und einen MEQ-Säure-Wert von 0,24 Milliäquivalenten /g Festharz auf. Die Abprüfergebnisse der unter Verwendung dieser Bindemitteldispersion 2 analog zu Beispiel 1 hergestellten Beschichtung zeigt Tabelle 1.

Beispiel 3

Es wurde analog Beispiel 1 verfahren, mit dem Unterschied, daß zur Herstellung des Bindemittels statt 5,410 Gew.-Teilen des Polyesters 1 nun 7,955 Gew.-Teile des Polyesters 3 eingesetzt wurden.

Die erhaltene Bindemitteldispersion 3 weist einen Festkörper von 36,3%, einen MEQ-Base-Wert von 0,52 Milliäquivalenten /g Festharz und einen MEQ-Säure-Wert von 0,25 Milliäquivalenten /g Festharz auf. Die Abprüfergebnisse der unter Verwendung dieser Bindemitteldispersion 3 analog zu Beispiel 1 hergestellten Beschichtung zeigt Tabelle 1.

Vergleichsbeispiel

Gemäß der Lehre der DE-PS 27 01 002, Beispiel 6 wurde das erfindungsgemäße Beispiel 1 nachgearbeitet, mit dem Unterschied, daß zur Herstellung des Bindemittels statt 5,410 Gew.-Teilen des Polyesters 1 nun 4,751 Gew.-Teile Polycaprolactondiol mit einem Molekulargewicht von 532 eingesetzt wurden.

Die Abprüfergebnisse der unter Verwendung dieser Bindemitteldispersion analog zu Beispiel 1 hergestellten Beschichtung zeigt Tabelle 1.

Tabelle 1: Ergebnis der Abscheidungen

| | Beispiel 1 | Beispiel 2 | Beispiel 3 | Vergleich |
|---|---|---|---|---|
| Filmdicke (µm) | 18 | 18 | 18 | 18 |
| MIBK-Test[1] | i.O. | i.O. | i.O. | i.O. |
| Erichsentiefung (mm) | 5,8 | 5,6 | 6,3 | 4,5 |
| Kugelschlagtest (Reverse-Impact Test) (m kg) | 0,23 | 0,23 | 0,46 | 0,06 |
| Kugelschlagtest (Impacttest) (m kg) | 0,46 | 0,46 | 0,69 | 0,12 |

1: 20 Doppelhübe mit einem Methylisobutylketon getränkten

Wattebausch; i.O. = in Ordnung

Die Abprüfergebnisse der Tabelle 1 zeigen, daß die unter Verwendung der erfindungsgemäßen Bindemittel hergestellten Beschichtungen im Vergleich zu den unter Verwendung der aus dem Stand der Technik (DE-PS-27 01 002) bekannten Bindemittel hergestellten Beschichtungen deutlich bessere Ergebnisse im Reverse-Impact-Test und im Impact-Test liefern. Weiterhin sind auch die Erichsentiefungs-Werte verbessert.

**Patentansprüche**

1. Wasserdispergierbare Bindemittel für kationische Elektrotauchlacke auf der Basis von modifizierten Epoxidharzen, wobei die Epoxidharze Reaktionsprodukte von
   (A) niedermolekularen, bevorzugt aromatische Gruppen enthalentenden Epoxidharzen,
   (B) einem oder mehreren Präpolymeren mit gegenüber Epoxidgruppen reaktiven Gruppen
   (C) primären, sekundären und/oder tertiären Aminen und/oder deren Salzen oder einer Sulfid/Säure-Mischung oder einer Phosphin/Säure-Mischung
      sind, dadurch gekennzeichnet, daß
   a) als Komponente (A) Epoxidharze mit einem Epoxidäquivalentgewicht unter 750 eingesetzt werden,
   b) als Komponente (B) 10 bis 60 Gew.-%, bevorzugt 20 bis 40 Gew.-%, bezogen auf das Gesamtbindemittel, eines oder mehrerer Präpolymerer mit einem Molekulargewicht (Massenmittel) von 500 bis 5000 und einem durchschnittlichen Gehalt von 0,1 bis 1,9 Hydroxylgruppen und 0,1 bis 1,0 Carboxylgruppen pro Molekül eingesetzt werden, wobei die Summe der Hydroxyl- und der Carboxylgruppen größer gleich 1 und kleiner gleich 2 ist,
   c) das Umsetzungsprodukt aus (A) und (B) einen Gehalt an aromatischen Gruppen, berechnet als im Festharzanteil in Gew.-% enthaltene Phenylengruppen, von 10 bis 45 Gew.-% aufweist und
   d) das Molverhältnis der Komponente A zu der Komponente B zwischen 4:1 und 1:1 liegt.

2. Verfahren zur Herstellung von Bindemitteln für kationische Elektrotauchlacke auf der Basis von modifi-

11

EP 0 352 457 B1

zierten Epoxidharzen, die gegebenenfalls Vernetzungsmittel, Pigmente, Verlaufmittel und andere übliche Hilfsmittel enthalten und bei denen die Epoxidharze Reaktionsprodukte von

(A) niedermolekularen, bevorzugt aromatische Gruppen enthaltenden Epoxidharzen,

(B) einem oder mehreren Präpolymeren mit gegenüber Epoxidgruppen reaktiven Gruppen

(C) primären, sekundären und/oder tertiären Aminen und/oder deren Salzen oder einer Sulfid/Säure-Mischung oder einer Phosphin/Säure-Mischung

sind, dadurch gekennzeichnet, daß

a) als Komponente (A) Epoxidharze mit einem Epoxidäquivalentgewicht unter 750 eingesetzt werden,

b) als Komponente (B) 10 bis 60 Gew.-%, bevorzugt 20 bis 40 Gew.-%, bezogen auf das Gesamtbindemittel eines oder mehrerer Präpolymerer mit einem Molekulargewicht (Massenmittel) von 500 bis 5000 und einem durchschnittlichen Gehalt von 0,1 bis 1,9 Hydroxylgruppen und 0,1 bis 1,0 Carboxylgruppen pro Molekül eingesetzt werden, wobei die Summe der Hydroxylund der Carboxylgruppen größer gleich 1 und kleiner gleich 2 ist,

c) das Umsetzungsprodukt aus (A) und (B) einen Gehalt an aromatischen Gruppen, berechnet als im Festharzanteil in Gew,.% enthaltene Phenylengruppen, von 10 bis 45 Gew.-% aufweist und

d) das Molverhältnis der Komponente A zu der Komponente B zwischen 4:1 und 1:1 liegt.

3. Bindemittel oder Verfahren nach einem der Ansprüche 1 oder 2, dadurch gekennzeichnet, daß als Komponente A Epoxidharze auf Basis Bisphenol A verwendet werden.

4. Bindemittel oder Verfahren nach einem der Ansprüche 1 bis 3, dadurch gekennzeichnet, daß das Molekulargewicht der Komponente B 530 bis 3000 beträgt.

5. Bindemittel oder Verfahren nach einem der Ansprüche 1 bis 4, dadurch gekennzeichnet, daß die Komponente B ein linearer Polyester ist.

6. Verwendung der Bindemittel nach einem der Ansprüche 1,3,4 oder 5 für Elektrotauchlacke.

7. Verfahren zum Beschichten elektrisch leitfähiger Substrate, bei dem

(1) das Substrat in ein wäßriges Elektrotauchbad eingetaucht wird, wobei das Elektrotauchbad als Bindemittel Reaktionsprodukte von

(A) niedermolekularen, bevorzugt aromatische Gruppen enthaltenden Epoxidharzen,

(B) einem oder mehreren Präpolymeren mit gegenüber Isocyanatgruppen reaktiven Gruppen

(C) primären, sekundären und/oder tertiären Aminen und/oder deren Salzen oder einer Sulfid/Säure-Mischung oder einer Phosphin/Säure-Mischung

ggf. in Kombination mit weiteren Bindemitteln sowie ggf. Vernetzungsmittel, Pigmente, Verlaufmittel und andere übliche Hilfsmittel enthält, wobei die Bindemittel durch Umsetzung selbstvernetzbar gemacht worden sind oder das Bad ein zusätzliches Vernetzungsmittel enthält,

(2) das Substrat als Kathode geschaltet wird,

(3) durch Gleichstrom ein Film auf dem Substrat abgeschieden wird,

(4) das Substrat aus dem Elektrotauchlackbad entfernt wird und

(5) der abgeschiedene Lackfilm eingebrannt wird,

dadurch gekennzeichnet, daß

a) als Komponente (A) Epoxidharze mit einem Epoxidäquivalentgewicht unter 750 eingesetzt werden,

b) als Komponente (B) 10 bis 60 Gew.-%, bevorzugt 20 bis 40 Gew.-%, bezogen auf das Gesamtbindemittel eines oder mehrerer Präpolymeren mit einem Molekulargewicht (Massenmittel) von 500 bis 5000 und einem durchschnittlichen Gehalt von 0,1 bis 1,9 Hydroxylgruppen und 0,1 bis 1,0 Carboxylgruppen pro Molekül eingesetzt werden, wobei die Summe der Hydroxylund der Carboxylgruppen größer gleich 1 und kleiner gleich 2 ist,

c) das Umsetzungsprodukt aus (A) und (B) einen Gehalt an aromatischen Gruppen, berechnet als im Festharzanteil in Gew.-% enthaltene Phenylengruppen, von 10 bis 45 Gew.-% aufweist und

d) das Molverhältnis der Komponente A zu der Komponente B zwischen 4:1 und 1:1 liegt.

8. Verfahren nach Anspruch 7, dadurch gekennzeichnet, daß die Komponente A ein Epoxidharz auf Basis Bisphenol A ist.

9. Verfahren nach einem der Ansprüche 7 oder 8, dadurch gekennzeichnet, daß das Molekulargewicht der Komponente B 500-3000 beträgt.

12

10. Verfahren nach einem der Ansprüche 7 - 9, dadurch gekennzeichnet, daß die Komponente B ein linearer Polyester ist.

**Claims**

1. Water-dispersible binders for cationic electrocoating paints based on modified epoxy resins, the epoxy resins being reaction products of
   (A) epoxy resins containing low-molecular, preferably aromatic groups,
   (B) one or more prepolymers having groups reactive toward epoxide groups,
   (C) primary, secondary and/or tertiary amines and/or their salts or a sulphide/acid mixture or a phosphine/acid mixture
   characterised in that
   a) epoxy resins having an epoxide equivalent weight below 750 are used as the component (A),
   b) 10 to 60 % by weight, preferably 20 to 40 % by weight, based on the total binder, of one or more prepolymers having a molecular weight (mass average) of 500 to 5000 and an average content per molecule of 0.1 to 0.9 hydroxyl groups and 0.1 to 1.0 carboxyl groups, are used as the component (B), the total of the hydroxyl and carboxyl groups being greater than, or equal to, 1 and smaller than, or equal to, 2,
   c) the reaction product from (A) and (B) has an aromatic groups content of 10 to 45 % by weight, calculated as phenylene groups contained in the resin solids in % by weight and
   d) the molar ratio of the component A to the component B is between 4:1 and 1:1.

2. Process for the preparation of binders for cationic electrocoating paints based on modified epoxy resins, which binders optionally contain crosslinking agents, pigments, flow-out agents and other customary auxiliary agents and in which the epoxy resins are reaction procucts of
   (A) epoxy resins containing low-molecular, preferably aromatic groups,
   (B) one or more prepolymers having groups reactive towards epoxide groups,
   (C) primary, secondary and/or tertiary amines and/or their salts or a sulphide/acid mixture or a phosphine/acid mixture,
   characterised in that
   a) epoxy resins having an epoxide equivalent weight below 750 are used as the component (A),
   b) 10 to 60 % by weight, preferably 20 to 40 % by weight, based on the total binder, of one or more prepolymers having a molecular weight (mass average) of 500 to 5000 and an average content per molecule of 0.1 to 1.9 hydroxyl groups and 0.1 to 1.0 carboxyl groups, the total of the hydroxyl and carboxyl groups being greater than, or equal to, 1 and smaller than, or equal to, 2,
   c) the reaction product from (A) and (B) has an aromatics group content of 10 to 45 % by weight, calculated as phenylene groups contained in the resin solids in % by weight and
   d) the molar ratio of the component A to the component B is between 4:1 and 1:1.

3. Binders or process according to either of Claims 1 or 2, characterised in that epoxy resins based on bisphenol A are used as the component A.

4. Binders or process according to any of Claims 1 to 3, characterised in that the molecular weight of the component B is 530 to 3000.

5. Binders or process according to any of Claims 1 to 4, characterised in that the component B is a linear polyester.

6. Use of the binders according to any of Claims 1, 3, 4 or 5 for electrocoating paints.

7. Process for coating electrically conducting substrates, in which process
   (1) the substrate is immersed in an aqueous electrocoating bath, the electrocoating bath containing as binder a reaction product of
      (A) epoxy resins containing low-molecular, preferably aromatic groups,
      (B) one or more prepolymers having groups reactive towards epoxide groups,
      (C) primary, secondary and/or tertiary amines and/or their salts or a sulphide/acid mixture or a phosphine/acid mixture,
   optionally in combination with other binders and, if desired, crosslinking agents, pigments, flow-out agents and other customary auxiliary agents, the binder having been rendered self-crosslinkable by reaction or the bath containing an additional crosslinking agent,

(2) the substrate is connected as cathode,

(3) a film is deposited on the substrate by the action of direct current,

(4) the substrate is removed from the electrocoating bath and

(5) the deposited film is baked, characterised in that

a) epoxy resins having an epoxide equivalent weight below 750 are used as the component (A),

b) 10 to 60 % by weight, preferably 20 to 40 % by weight, based on the total binder, of one or more prepolymers having a molecular weight (mass average) of 500 to 5000 and an average content per molecule of 0.1 to 1.9 hydroxyl groups and 0.1 to 1.0 carboxyl groups, are used as the component (B), the total of the hydroxyl and carboxyl groups being greater than, or equal to, 1 and smaller than, or equal to, 2,

c) the reaction product from (A) and (B) has an aromatic groups content of 10 to 45 % by weight, calculated as phenylene groups contained in the resin solids in % by weight and

d) the molar ratio of the component A to the component B is between 4:1 and 1:1.

8. Process according to Claim 7, characterised in that the component A is an epoxide resin based on bisphenol A.

9. Process according to either of Claims 7 or 8. characterised in that the molecular weight of the component B is 500-3000.

10. Process according to any of Claims 7 - 9, characterised in that the component B is a linear polyester.

## Revendications

1 - Liants dispersables dans l'eau pour laques d'électrodéposition cationiques, à base de résines époxydiques modifiées, les résines époxydiques étant des produits de réaction :

(A) de résines époxydiques de faible masse moléculaire, de préférence contenant des groupes aromatiques ;

(B) d'un ou plusieurs prépolymères présentant des groupes réactifs vis-à-vis des groupes époxyde ;

(C) d'amines primaires, secondaires et/ou tertiaires, et/ou leurs sels, ou un mélange sulfure/acide ou un mélange phosphine/acide,

caractérisés par le fait que :

(a) comme composant (A), sont utilisées des résines époxydiques présentant un poids équivalent en époxyde inférieur à 750 ;

(b) comme composant (B) , sont utilisés 10 à 60% de poids, de préférence, 20 à 40% en poids, par rapport au liant total, d'un ou plusieurs prépolymères présentant une masse moléculaire (moyenne en poids) de 500 à 5000 et une teneur moyenne de 0,1 à 1,9 groupe hydroxyle et 0,1 à 1,0 groupe carboxyle par molécule, la somme des groupes hydroxyle et des groupes carboxyle étant supérieure ou égale à 1 et inférieure ou égale à 2 ;

(c) le produit de réaction de (A) et (B) présente une teneur en groupes aromatiques, calculés en tant que groupes phénylène contenus dans la fraction en % en poids de la résine solide, de 10 à 45% en poids ; et

(d) le rapport molaire du composant (A) au composant (B) se situe entre 4 : 1 et 1 : 1.

2 - Procédé de fabrication de liants pour laques d'électrodéposition cationiques à base de résines époxydiques modifiées, qui contiennent, le cas échéant, des agents réticulants, des pigments, des agents favorisant l'écoulement et autres adjuvants usuels, et dans lesquels les résines époxydiques sont des produits de réaction :

(A) de résines époxydiques de faible masse moléculaire, de préférence contenant des groupes aromatiques ;

(B) d'un ou plusieurs prépolymères présentant des groupes réactifs vis-à-vis des groupes époxyde ;

(C) d'amines primaires, secondaires et/ou tertiaires, et/ou leurs sels, ou un mélange sulfure/acide ou un mélange phosphine/acide,

caractérisé par le fait que :

(a) comme composant (A), sont utilisées des résines epoxydiques présentant un poids équivalent en époxyde inférieur à 750 ;

(b) comme composant (B) , sont utilisés 10 à 60% de poids, de préférence, 20 à 40% en poids, par rapport au liant total, d'un ou plusieurs prépolymères présentant une masse moléculaire (moyenne en poids) de 500 à 5000 et une teneur moyenne de 0,1 à 1,9 groupe hydroxyle et 0,1 à 1,0 groupe carboxyle par molécule, la somme des groupes hydroxyle et des groupes carboxyle étant supérieure ou égale à 1 et inférieure ou égale à 2 ;

(c) le produit de réaction de (A) et (B) présente une teneur en groupes aromatiques, calculés en tant que groupes phénylène contenus dans la fraction en % en poids de la résine solide, de 10 à 45% en poids ; et

(d) le rapport molaire du composant (A) au composant (B) se situe entre 4 : 1 et 1 : 1.

3 - Liants ou procédé selon l'une des revendications 1 ou 2, caractérisé(s) par le fait que sont utilisées, comme composant (A), des résines époxydiques à base de bisphénol A.

4 - Liants ou procédé selon l'une quelconque des revendications 1 à 3, caractérisé(s) par le fait que la masse moléculaire du composant (B) s'élève à 530 à 3000.

5 - Liants ou procédé selon l'une quelconque des revendications 1 à 4, caractérisé(s) par le fait que le composant (B) est un polyester linéaire.

6 - Utilisation des liants tels que définis à l'une quelconque des revendications 1, 3, 4 ou 5 pour des laques d'électrodéposition.

7 - Procédé de revêtement de substrats conducteurs de l'électricité, suivant lequel :

(1) le substrat est plongé dans un bain aqueux d'électrodéposition, le bain d'électrodéposition contenant, comme liant, des produits de réaction :

(A) de résines époxydiques de faible masse moléculaire, de préférence contenant des groupes aromatiques ;

(B) d'un ou plusieurs prépolymères présentant des groupes réactifs vis-à-vis des groupes époxyde ;

(C) d'amines primaires, secondaires et/ou tertiaires, et/ou leurs sels,, ou un mélange sulfure/acide ou un mélange phosphine/acide,

le cas échéant en combinaison avec d'autres liants, de même que, le cas échéant, des agents réticulants, des pigments, des agents favorisant l'écoulement et autres adjuvants usuels, les liants ayant été rendus auto-réticulables par réaction ou bien le bain contenant un agent réticulant additionnel,

(2) le substrat est monté en cathode ;

(3) un film est déposé sur le substrat par application de courant continu ;

(4) le substrat est retiré du bain d'électrodéposition ; et

(5) le film de laque déposé est soumis à une cuisson,

caractérisé par le fait que :

(a) comme composant (A), sont utilisées des résines époxydiques présentant un poids équivalent en époxyde inférieur à 750 ;

(b) comme composant (B) , sont utilisés 10 à 60% de poids, de préférence, 20 à 40% en poids, par rapport au liant total, d'un ou plusieurs prépolymères présentant une masse moléculaire (moyenne en poids) de 500 à 5000 et une teneur moyenne de 0,1 à 1,9 groupe hydroxyle et 0,1 à 1,0 groupe carboxyle par molécule, la somme des groupes hydroxyle et des groupes carboxyle étant supérieure ou égale à 1 et inférieure ou égale à 2 ;

(c) le produit de réaction de (A) et (B) présente une teneur en groupes aromatiques, calculés en tant que groupes phénylène contenus dans la fraction en % en poids de la résine solide, de 10 à 45% en poids ; et

(d) le rapport molaire du composant (A) au composant (B) se situe entre 4 : 1 et 1 : 1.

8 - Procédé selon la revendication 7, caractérisé par le fait que le composant (A) est une résine époxydique à base de bisphénol A.

9 - Procédé selon l'une quelconque des revendications 7 ou 8, caractérisé par le fait que la masse moléculaire du composant (B) s'élève à 500-3000.

10 - Procédé selon l'une quelconque des revendications 7 à 9, caractérisé par le fait que le composant (B) est un polyester linéaire.